# EUROPÄISCHE PATENTSCHRIFT

(11) **EP 3 618 981 B1**
(45) Veröffentlichungstag und Bekanntmachung des Hinweises auf die Patenterteilung: **06.04.2022**
(21) Anmeldenummer: 18722935.6
(22) Anmeldetag: 25.04.2018
(51) Int. Cl.: B21D 5/00, B21D 5/08, G05B 23/02

(54) **ROLLFORMANLAGE MIT SENSOR-ROLLFORMGERÜST**
ROLL-FORMING UNIT WITH SENSOR-ROLL-FORMING FRAME
INSTALLATION DE PROFILAGE POURVUE D'UNE CAGE DE PROFILAGE À CAPTEUR

(30) Priorität: 05.05.2017 DE 102017109713
(43) Veröffentlichungstag der Anmeldung: 11.03.2020
(60) Teilanmeldung: 21175720.8
(73) Patentinhaber: data M Sheet Metal Solutions GmbH, 83626 Valley/Oberlaindern (DE)
(72) Erfinder: SEDLMAIER, Albert, 83714 Miesbach (DE)
(74) Vertreter: Farago-Schauer, Peter Andreas
(86) Internationale Anmeldenummer: PCT/EP2018/060621
(87) Internationale Veröffentlichungsnummer: WO 2018/202514

(56) Entgegenhaltungen:
- KR-A- 20110 075 641
- KR-B1- 101 246 716
- US-A- 5 761 945

## Beschreibung

Die vorliegende Erfindung betrifft eine Rollformanlage mit einer Vielzahl hintereinander angeordneter Rollformgerüste, die das Blechband der Reihe nach formen und/oder führen, wobei mindestens eines der Rollformgerüste als Sensor-Rollformgerüst ausgebildet ist.

Übliche Rollformanlagen verformen ein Blechband durch eine Vielzahl hintereinander angeordneter Rollformgerüste in sukzessiven Schritten zu einem gewünschten Blechprofil. Dabei nimmt jedes Rollformgerüst eine kleine Veränderung am Blechband vor oder führt oder treibt dieses an der jeweiligen Stelle an. Dabei müssen die Rollformgerüste zueinander möglichst exakt ausgerichtet sein und möglichst exakt eine jeweilige vorbestimmte Verformung vornehmen.

DE 10 2007 062 104 A1 offenbart eine klassische Rollformanlage mit der Vielzahl nacheinander angeordneter Rollformgerüste, die das Blechband der Reihe nach schrittweise bearbeiten. Am Ende der Rollformanlage das resultierende Blechprofil üblicherweise in periodischen Zeitabständen vermessen, um eine Einhaltung vorbestimmter Abmaße und zulässiger Toleranzen sicherzustellen oder andernfalls das Blechprofil auszusondieren. Dabei entsteht fast unvermeidlich ein Ausschuss, und es müssen die Rollformgerüste bei einem Überschreiten von vorbestimmten Toleranzen nachgestellt werden. Eine frühzeitige Erkennung einer Abweichung ist mit der offenbarten Rollformanlage nicht möglich.

DE10 2008 036 275 B4 offenbart einen optischen Sensor, der in oder nach der Rollformanlage zur Vermessung des Blechprofils angeordnet ist, um die Einhaltung der vorbestimmten Abmaße sicherzustellen oder den Ausschuss zu bewirken.

KR 2011 0075 641 A auf welcher der Oberbegriff des Anspruchs 1 basiert offenbart ein Rollformgerüst mit einem Sensor zu einer Überwachung des Rollformgerüsts in der Rollformanlage, jedoch ist dabei eine Auswertung eines Sensorsignals des Sensors oft schwierig und umständlich einzustellen.

Bei einem Einrichten einer Rollformanlage kommt es zwangsläufig zu einem anfänglichen nicht unbeträchtlichen Ausschuss, bis alle Rollen oder Rollformgerüste richtig zueinander und zum Blechband eingestellt sind.

Auch haben Rollformanlagen die Rollformgerüste oft über eine Länge von 3 Metern oder länger verteil, so dass eine Verstellung eines anfänglichen Rollformgerüsts, das beispielsweise eine erste Kante bildet, erst am Ende detektiert wird, so dass dadurch schon über die Länge der Rollformanlage ein Ausschuss besteht. Da Ausschuss mit unnötigen Kosten verbunden ist, ist dieser natürlich möglichst klein zu halten.

Bei einem Verzug oder beispielsweise bei einem Lagerschaden einer Rolle oder Walze eines Rollformgerüsts werden dadurch auftretende Veränderungen am Blechprofil am Ende der Rollformanlage bestenfalls gleich oder erst bei einer periodischen Überprüfung festgestellt. Daraufhin muss dann durch den Bediener der Rollformanlage untersucht werden, wodurch die Veränderung oder eine Fehlerhaftigkeit tatsächlich verursacht wird. Worauf dann entweder ein Teil ausgetauscht oder nachgestellt wird. Dadurch kommt es zu einem Zeitverzug, die Anlage muss von einem entsprechend sehr gut geschulten Fachmann bedient werden, welches alles Kostenfaktoren sind, die möglichst geringgehalten werden sollten.

Die Aufgabe der Erfindung, um die Nachteile aus dem Stand der Technik zu beseitigen, besteht also in der Bereitstellung einer Vorrichtung und eines entsprechenden Verfahrens, die/das eine möglichst frühzeitige Erkennung von Abweichungen eines Soll-Profilierungsprozesses erkennt und anzeigt

Die vorstehende Aufgabe wird von einer Vorrichtung und einem Verfahren gemäß den Merkmalen der unabhängigen Ansprüche 1 und 13 gelöst. Weitere vorteilhafte Ausführungsformen der Erfindung sind in den abhängigen Ansprüchen angegeben.

Erfindungsgemäß wird eine Rollformanlage zu einem Rollformen eines Blechbandes mit einer Vielzahl hintereinander angeordneter Rollformgerüste, die das Blechband der Reihe nach formen und/oder führen und ein dazu entsprechendes Verfahren zur Verfügung gestellt, wobei die Rollformanlage folgendes umfasst:
- mindestens ein Sensor-Rollformgerüst, das in der Vielzahl der hintereinander angeordneten Rollformgerüste angeordnet ist und welches das Blechband formt, biegt und/oder führt;
- eine erste Rolle und eine zweite Rolle, die um eine jeweilige Drehachse drehbar mit dem jeweiligen Sensor-Rollformgerüst verbunden sind und davon in Position gehalten werden, wobei die erste und zweite Rolle so angeordnet sind, dass sie das Blech dazwischen klemmen;
- mindestens einen Sensor, der im jeweiligen Sensor-Rollformgerüst so angeordnet ist, um eine Kraft, eine Schwingung oder ein Drehmoment die/das vom jeweiligen Sensor-Rollformgerüst auf das Blech ausgeübt wird, misst und ein entsprechendes Sensorsignal erzeugt;
- eine Mikroprozessoreinheit mit einem Detektoralgorithmus, der ausgebildet ist, das Sensorsignal mit einem entsprechenden vorbestimmten Sollwert oder einer Sollwertkurve bei einem entsprechenden vorbestimmten zulässigen Toleranzbereich zu vergleichen, wobei wenn das Sensorsignal im zulässigen Toleranzbereich liegend detektiert wird, ein erster Zustand und andernfalls mindestens ein zweiter Zustand des jeweiligen Sensor-Rollformgerüsts erkannt wird; und
- eine Anzeigeeinheit, die den erkannten ersten und/oder zweiten Zustand für das jeweilige Sensor-Rollformgerüst anzeigt;
- wobei die Mikroprozessoreinheit (6) erfindungsgemäß einen zweiten Detektoralgorithmus umfasst, der mit einer Mustererkennung ausgebildet ist, die das mindestens eine Sensorsignal oder den Verlauf des Sensorsignals mit einem Erkennungsmuster oder Erkennungsparametern vergleicht und bei Übersteigen eines vorbestimmten Korrelationswertes einen weiteren Zustand erkennt, wie einen Lagerschaden, eine Blechdickenänderung, eine Verstellung oder einen Verzug des Sensor-Rollformgerüsts (5) in Bezug zu einem benachbarten Rollformgerüst oder eine andere Veränderung.

Durch die erfindungsgemäße Rollformanlage mit dem Sensor-Rollformgerüst kann nach einer Bestimmung des Sollwerts oder der Sollwertkurve und des Toleranzbereichs beispielsweise in einem Testlauf, der ordnungsgemäß läuft, danach in Betrieb eine Abweichung des Sensorsignals vom Toleranzbereich sofort festgestellt werden, wobei dann eine Prozessabweichung festgestellt wird. Bei Detektion des zweiten Zustands oder eines weiteren Zustandes kann beispielsweise auf Basis von typischen Mustern im Sensorsignal auf einen bestimmten Schaden, eine bestimmte Abnutzung, eine Blechdickenänderung, ein Profilverlauf, das von einem vorbestimmten Profilverlauf abweicht, und auf andere Einflüsse rückgeschlossen werden. Besonders vorteilhaft ist dabei auch, dass durch eine bevorzugte Mustererkennung im Sensorsignal oder im Sensorsignalverlauf eine präventive Diagnose zum System hergestellt werden kann. So lassen sich beispielsweise Lagerschäden oder Rollenschäden frühzeitig erkennen, um dann Ersatzteile oder einen speziellen Fachmann dazu bestellen zu können, ohne die Rollformanlage noch ganz anhalten zu müssen. Es kann auch eine Blechdickenänderung oder eine Prozessänderung einer der vorangegangenen Rollformgerüste festgestellt werden. Ebenso kann das Sensorsignal zu einer Verstellung vorangehender Rollformgerüste verwendet werden, um beispielsweise das Blechband stärker flach zu pressen oder ähnliches.

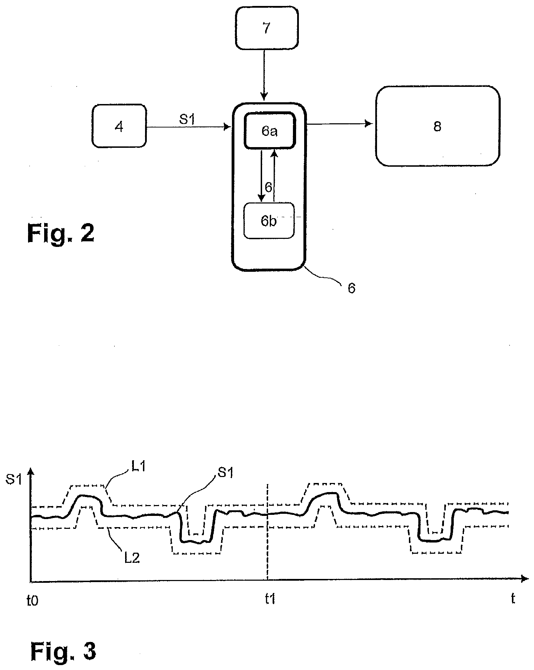

Bei der Detektion des Sensorsignals kann das Sensorsignal auch als eine periodische Signalkurve, wie beispielsweise in Fig. 3 dargestellt, verstanden werden, wobei das Sensorsignal dabei mit einer Sollwertkurve oder einem kurvenförmigen Toleranzbereich verglichen wird.

Durch die Früherkennung oder präventive Diagnose können der Ausschuss deutlich reduziert und Serviceintervalle an eine reale Situation angepasst werden. Eine entsprechende Kostenersparnis ist dem Fachmann dabei evident.

Verschiedene Verfahren des Bestimmens des Sollwerts, der Sollwertkurve und des Toleranzbereichs sind in der detaillierten Beschreibung aufgeführt. Besonders hervorzuheben ist dabei noch, dass durch eine lernende Mustererkennung noch viel besser problematische Zustände am Sensor-Rollformgerüst erkannt und zugeordnet werden können und Frühdiagnosen für eine Nachstellung oder einen Austausch eines Ersatzteils vorgenommen werden können. Dabei kann die Mustererkennung oder der der Detektoralgorithmus, der eine Vielzahl von Erkennungsalgorithmen umfassen kann, durch ein Bedienersignal "eingelernt" werden. Vorteilhafterweise erkennt der Detektoralgorithmus den Zustand und bevorzugt eine Abnutzung oder Verstellung des Sensor-Rollformgerüsts und zeigt diesen dem Benutzer oder Bediener über die Anzeigeeinheit an. Dabei ist es auch sinnvoll, dass durch den Detektoralgorithmus ein Trend eines Zustands bestimmt wird, um frühzeitig eine Abnutzung beispielsweise eines Lagers erkennen zu können. Auch können dem Bediener dabei Hinweise gegeben werden, wie der ordnungsgemäße Zustand wieder herstellbar ist. Solche lernenden Mustererkennungsalgorithmen sind im Stand der Technik aus anderen Anwendungen in einer Signalanalyse oder Signalverarbeitung bekannt. Dabei können beispielsweise Neuronale Netze, Kalmann-Filter und andere prädiktive Filteralgorithmen verwendet werden. Bevorzugt können durch die Mikroprozessoreinheit anhand des Sensorsignals und von Bedienersignalen auch statistische Auswertungen durchgeführt werden, die es ermöglichen, einen darauffolgenden Zustand besser zu erkennen. Bevorzugt wird auch eine Protokollierung des Zustands des jeweiligen Sensor-Rollformgerüsts durch Abspeichern des Sensorsignals und der Bedienersignale vorgenommen. Ebenso kann der Zustand des jeweiligen Rollformgerüsts an eine höhere Steuerung weitergeleitet werden, um beispielsweise von einer zentralen Stelle aus, die Zustände der jeweiligen Rollformgerüste und/oder sonstiger Parameter anzuzeigen und zu dokumentieren. Dabei können die Daten über die Zustände und/oder des Sensorsignals auch per Netzwerk übertragen, gesammelt und bevorzugt ausgewertet werden, um beispielsweise den Detektionsalgorithmus von einem am Netzwerk angeschlossenen Rechner zu optimieren und einen optimierten Detektionsalgorithmus oder entsprechende Parameter dazu an die Mikroprozessoreinheit zurück zu übertragen. Durch eine solche Optimierung des Detektionsalgorithmus können beispielsweise der Sollwert und/oder die Sollwertkurve und der Toleranzbereich und die Parameter zur Detektion initial besser und dadurch für den Bediener vereinfacht bestimmt werden.

Bevorzugt wertet der Mikrocontroller durch den Detektoralgorithmus das Sensorsignal oder die entsprechenden Signalkomponenten des jeweiligen Sensor-Rollformgerüsts aus, dem der Detektoralgorithmus zugeordnet ist. Es ist aber auch denkbar, dass der Detektoralgorithmus Signalkomponenten von einem oder mehreren Sensoren von benachbarten Sensor-Rollengerüsten oder von einem oder mehreren anderen Sensoren, die in der Rollformanlage angeordnet sind, auswertet und bevorzugt einen Zustand einer Ausrichtung der Rollformgerüste zueinander bestimmen kann.

Bevorzugte Ausführungsformen gemäß der vorliegenden Erfindung sind in nachfolgenden Zeichnungen und in einer detaillierten Beschreibung dargestellt, sie sollen aber die vorliegende Erfindung nicht ausschließlich darauf begrenzen.

Es zeigen
- Fig. 1: schematisch eine perspektivische Ansicht eines Ausschnitts einer Rollformanlage zur Bearbeitung eines Blechbandes, wobei zwei benachbarte Rollformgerüste mit Sensoren ausgestattet sind, die jeweils eine Sensorsignalkomponente zu einem Sensorsignal erzeugen, wobei die Rollformgerüste jeweils oben eine erste Welle für eine erste Rolle oder Walze und unten eine zweite Welle für eine zweite Rolle oder Walze umfassen, um dazwischen das Blechband zu formen, wobei das Blechband und die Rollen oder Walzen in der Darstellung weggelassen sind;
- Fig. 2: ein schematisches Blockdiagramm mit einem Sensor, einer zentralen Mikroprozessoreinheit mit Mikroprozessor und Speicher, einem Bediensignalgeber und einer Anzeigeeinheit;
- Fig. 3: das Sensorsignal als Verlauf über der Zeit, wobei ein periodisches typisches Muster erkennbar ist, und es ist ein Toleranzbereich strichliert eingezeichnet; und
- Fig. 4: eine Ergebnisberechnung einer Finite Elemente Analyse, die an einer Stelle des Blechbands, an der durch eines der Rollformgerüste eine Umformung durchgeführt wird, die dabei auftretenden Kräfte als berechnete Vektoren darstellt.

### Detaillierte Beschreibung von Ausführungsbeispielen

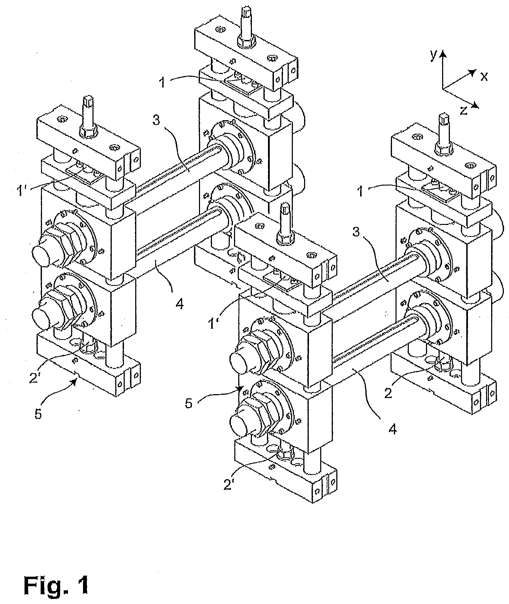

In Fig. 1 sind zwei benachbarte bevorzugte Rollformgerüste als ein Ausschnitt einer bevorzugten Rollformanlage zum Rollformen eines Blechbandes dargestellt. Prinzipiell umfasst die bevorzugte Rollformanlage zum Rollformen des Blechbandes üblicherweise eine Vielzahl hintereinander angeordneter Rollformgerüste, die das Blechband der Reihe nach formen und/oder führen. In der Darstellung in Fig. 1, sei darauf hingewiesen, sind die zwei Rollformgerüste nur mit jeweils einer oberen ersten Welle 3 und einer unteren zweiten Welle 4 dargestellt, die jeweils normalerweise eine dafür vorgesehene Rolle oder Walze aufgesteckt tragen, die das Blechband dazwischen formen, biegen und/oder führen. Demgemäß sind auf der ersten Welle 3 bevorzugt eine erste Rolle, die auch eine erste Walze sein kann, und auf der zweiten Welle 4 eine zweite Rolle, die auch eine zweite Walze sein kann, aufgesteckt. Wenn das Blechband zwischen der ersten und zweiten Rolle geformt, gebogen und/oder geführt wird treten entsprechende Kräfte an der ersten und zweiten Rolle auf.

Erfindungsgemäß umfasst die hier vorgestellte Rollformanlage folgendes:
a) mindestens ein Sensor-Rollformgerüst 5, das in der Vielzahl der hintereinander angeordneten Rollformgerüste angeordnet ist und welches das Blechband formt, biegt und/oder führt. Dabei kann das jeweilige Sensor-Rollformgerüst 5 am Angang, am Ende oder dazwischen in der Vielzahl der Rollformgerüste angeordnet sein;
b) die erste Rolle und zweite Rolle, die um eine jeweilige Drehachse drehbar mit dem jeweiligen Sensor-Rollformgerüst 5 verbunden sind und davon in Position gehalten werden, wobei die erste und zweite Rolle so angeordnet sind, dass sie das Blechband dazwischen klemmen. Dabei ist das jeweilige Sensor-Rollformgerüst 5 bevorzugt im Wesentlichen in einer gleichen Höhe wie ein direkt benachbartes Rollformgerüst angeordnet, um keine unerwünschten Spannungen zwischen dem Blechband und dem benachbarten Rollformgerüst zu erzeugen;
c) mindestens einen Sensor 1, 2, der im jeweiligen Sensor-Rollformgerüst 5 so angeordnet ist, um eine Kraft, eine Schwingung oder ein Drehmoment die/das vom jeweiligen Sensor-Rollformgerüst 5 auf das Blech ausgeübt wird, misst und ein entsprechendes Sensorsignal erzeugt;
d) eine Mikroprozessoreinheit 6 mit einem Detektoralgorithmus, der ausgebildet ist, das Sensorsignal mit einem entsprechenden vorbestimmten Sollwert oder einer Sollwertkurve bei einem entsprechenden vorbestimmten zulässigen Toleranzbereich zu vergleichen, wobei wenn das Sensorsignal im zulässigen Toleranzbereich liegend detektiert wird, ein erster Zustand und andernfalls mindestens ein zweiter Zustand des jeweiligen Sensor-Rollformgerüsts 5 erkannt wird; und
   eine Anzeigeeinheit 8, die den erkannten ersten und/oder zweiten Zustand für das jeweilige Sensor-Rollformgerüst 5 anzeigt;
   wobei die Mikroprozessoreinheit (6) erfindungsgemäß einen zweiten Detektoralgorithmus umfasst, der mit einer Mustererkennung ausgebildet ist, die das mindestens eine Sensorsignal oder den Verlauf des Sensorsignals mit einem Erkennungsmuster oder Erkennungsparametern vergleicht und bei Übersteigen eines vorbestimmten Korrelationswertes einen weiteren Zustand erkennt, wie beispielsweise einen Lagerschaden, eine Blechdickenänderung, eine Verstellung oder einen Verzug des Sensor-Rollformgerüsts (5) in Bezug zu einem benachbarten Rollformgerüst oder eine andere Veränderung.

Bevorzugt ist der mindestens eine Sensor oder einer der Sensoren ein Kraftsensor, wie beispielsweise eine Kraftmessdose oder ein Dehnungsmessstreifen oder ein Stromsensor, um ein Motorantriebsdrehmoment zu bestimmen. Bevorzugt ist der mindestens eine Sensor oder einer der Sensoren ein Vibrationssensor oder ein Körperschallmikrofon oder ein Mikrofon, um beispielsweise Schwingungen am Sensor-Rollformgerüst 5 oder in der Rollformanlage zu detektieren und durch den Detektoralgorithmus auswerten zu können. Als einer der Sensoren ist auch ein Temperatursensor denkbar, um eine Erwärmung wie beispielsweise durch Reibung zu detektieren.

In Fig. 1 sind die zwei Rollformgerüste jeweils als Sensor-Rollformgerüst 5 ausgebildet dargestellt. In dem jeweiligen Sensor-Rollformgerüst 5 sind dabei bevorzugt zwei erste Sensoren 1, 1' so im Sensor-Rollformgerüst 5 angeordnet, dass sie zusammen eine erste Kraftkomponente in Y-Richtung messen, die vom Blechband senkrecht auf die erste Rolle und die erste Welle 3 eingeleitet wird. Bevorzugt sind die zwei ersten Sensoren 1, 1' dabei an jeweiligen Enden der ersten Welle 3 so angeordnet, um zusammen eine Gesamtkraft auf die erste Welle messen zu können. In Fig. 1 sind als die ersten Sensoren 1,1' Kraftmessdosen dargestellt, es können aber ebenso andere Kraftsensoren sein, wie beispielsweise Dehnungsmessstreifen, die am Sensor-Rollformgerüst 5 so angebracht sind, um die erste Kraftkomponente in Y-Richtung messen. Das Sensorsignal würde dabei die mindestens zwei Signalkomponenten der beiden ersten Sensoren 1, 1' umfassen. Dabei kann der Detektoralgorithmus entweder die zwei Signalkomponenten direkt auswerten und/oder ein daraus resultierendes Sensorsignal, das beispielsweise ein Summensignal der zwei Signalkomponenten ist.

Es kann im Sensor-Rollformgerüst 5 auch mindestens ein Sensor angeordnet sein, der eine zweite Kraftkomponente in X-Richtung misst, die vom Blechband tangential auf die erste Rolle und quer zu einer Längsrichtung des Blechbandes eingeleitet wird. Zudem kann im Sensor-Rollformgerüst 5 auch mindestens ein Sensor angeordnet sein, der eine dritte Kraftkomponente in Z-Richtung misst, die vom Blechband tangential in der Längsrichtung auf die erste Rolle eingeleitet wird, beispielsweise durch einen Antrieb oder ein Bremsmoment der ersten Welle 3 und/oder der zweiten Welle 4.

In dem bevorzugten Sensor-Rollformgerüst 5 können auch zwei zweite Sensoren 2, 2' angeordnet sein, die zusammen eine vierte Kraftkomponente in Y-Richtung bestimmen, die vom Blechband senkrecht auf die zweite Rolle und die zweite Welle eingeleitet wird. Das Sensorsignal würde dabei auch die Signalkomponenten der beiden zweiten Sensoren 2, 2' umfassen. Ebenso kann der Detektoralgorithmus auch hier aus den zwei Signalkomponenten der zweiten Sensoren 2, 2' sowohl ein viertes resultierendes Sensorsignal als auch jede der Signalkomponenten einzeln auswerten.

Bevorzugt können auch ein oder mehrere Sensoren so angeordnet werden, dass sie eine weitere Kraft oder entsprechende Kraftkomponenten, mit der das Sensor-Rollformgerüst 5 in der Rollformanlage auf einem Maschinenbett in Position gehalten wird, messen und dabei mindestens einen Teil des Sensorsignals erzeugen. Die weitere Kraft kann dabei als ein Maß eines Verzugs des jeweiligen Sensor-Rollformgerüst 5 in Bezug zu einem benachbarten Rollformgerüst dienen, wenn beispielsweise die Gesamtkraft auf die erste Welle 3 von der Gesamtkraft auf die zweite Welle 4, mit dem Blech dazwischen, zu sehr abweichen würde.

Ebenso kann der mindestens eine Sensor im Sensor-Rollformgerüst 5 auch so angeordnet sein, um eine fünfte Kraftkomponente in X-Richtung zu messen, die vom Blechband tangential auf die zweite Rolle und quer zur Längsrichtung des Blechbandes eingeleitet wird. Und es kann der mindestens eine Sensor im Sensor-Rollformgerüst 5 auch so angeordnet sein, um eine sechste Kraftkomponente in Z-Richtung zu messen, die vom Blechband tangential in der Längsrichtung auf die zweite Rolle eingeleitet wird.

Weitere Sensoren und Anordnungen zur Messung einer Kraft und/oder eines Drehmoments oder Vielfachen davon sind ebenso denkbar.

Die Kraft oder die Kräfte sind dabei beispielsweise ein Maß für einen Walzspalt in Bezug zur Dicke des Blechbandes, für einen Grad der Umformung, für eine Materialgüte oder -härte des Blechbandes, und für Diskontinuitäten im Blechband.

Zur Klarheit sei festgestellt, dass die Mikroprozessoreinheit 6, wie in Fig. 2 dargestellt, mindestens einen Mikroprozessor 6a und einen Speicher 6b umfasst. Das Sensorsignal kann dabei als ein digitales Signal oder als ein analoges Signal über einen Analog-DigitalUmsetzer der Mikroprozessoreinheit 6 zugeleitet werden.

Zur Klarheit sei festgestellt, dass unter dem Sensorsignal ein einziges Signal oder auch eine Vielzahl von einzelnen Signalen oder Signalkomponenten verstanden werden kann, die das Sensorsignal umfasst, wie es beispielsweise bei einem vektoriellen oder mehrdimensionalen Sensorsignal der Fall ist. Bei dem mehrdimensionalen Sensorsignal sind der Sollwert, die Sollwertkurve und/oder der Toleranzbereich bevorzugt ebenso mehrdimensional zu verstehen. Dabei können aber auch aus den mehreren Signalkomponenten des mehrdimensionalen Sensorsignals durch die Mikroprozessoreinheit oder den Detektoralgorithmus ein oder mehrere resultierende Sensorsignale gebildet werden, so dass die Anzahl der Sollwerte, Sollwertkurven und/oder der Toleranzbereiche oder deren Komponenten zwangsläufig nicht mit der Anzahl der Sensorsignalkomponenten übereinstimmen müssen. So können beispielsweise auch aus einem einzigen Sensorsignal mehrere verarbeitete Signalkomponenten extrahiert werden, die dann jeweils mit einem entsprechenden Toleranzbereich oder einer Mustererkennung verglichen werden, wie das beispielsweise bei einer Spektralanalyse und anschließender Mustererkennung der Fall ist. Dabei sei zur Klarheit auch festgestellt, dass das Sensorsignal, wie in Fig. 3 skizziert, auch als ein periodisches Sensorsignal mit einem typischen Verlauf des Sensorsignals verstanden werden kann. Dabei wird das periodische Sensorsignal vom Detektoralgorithmus dann bevorzugt mit einem nicht konstanten Toleranzbereich verglichen. In Fig. 3 ist beispielartig ein nicht konstanter Toleranzbereich zwischen einer oberen Schwellwertkurve L1 und einer unteren Schwellwertkurve L2 dargestellt, zwischen denen sich das Sensorsignal im ersten Zustand bewegen darf. Dabei ist dem Fachmann klar, dass der Detektoralgorithmus, um einen Vergleich des Sensorsignals mit dem Toleranzbereich ordnungsgemäß durchführen zu können, zunächst eine Periodenerkennung des Sensorsignals durchführen muss, um dann den Toleranzbereich ordnungsgemäß zuzuordnen. Bei einer einfacheren Detektion durch den Detektoralgorithmus ohne eine Periodenerkennung müsste der Toleranzbereich weiter gewählt werden.

Bevorzugt ist der erste Zustand des Sensor-Rollformgerüst 5 ein bevorzugt ordnungsgemäßer Zustand, in dem das Sensor-Rollformgerüst 5 prozessmäßig bevorzugt ordnungsgemäß läuft. Der vom Detektoralgorithmus erkannte zweite Zustand stellt eine Abweichung vom bevorzugt ordnungsgemäßen Zustand des Sensor-Rollformgerüst 5 oder des Prozesses in der Rollformanlage dar und kann beispielsweise ein zu dickes oder zu dünnes Blechband oder einen anfänglichen Lagerschaden oder eine andere Prozessabweichung vom Soll-Prozess zur Ursache haben. Bevorzugt ist der Detektoralgorithmus ausgebildet auch einen dritten Zustand zu erkennen, der beispielsweise im Vergleich mit dem zweiten Zustand eine noch größere oder aber kleinere Abweichung vom ersten Zustand anzeigt. Der dritte Zustand kann beispielsweise eine noch größere oder kleinere Blechbanddicke oder einen anfänglichen oder aber gravierenden Lagerschaden zur Ursache haben. Indem der zweite oder ein weiterer Zustand, der von einem bevorzugten ordnungsgemäßen Zustand am Sensor-Rollformgerüst abweicht, erkannt wird, kann beispielsweise der Prozess am Sensor-Rollformgerüst angehalten, ein Alarmsignal ausgegeben oder eine automatische aktuatorische Nachstellung des Sensor-Rollformgerüsts vorgenommen werden.

Das Alarmsignal kann generell ein optisches, ein akustisches oder ein funktionales Alarmsignal sein. Als funktionales Alarmsignal wird beispielsweise ein automatisches Anhalten oder Abschalten oder ein aktuatorisches Stellen der Rollformanlage in einen sicheren und/oder nicht selbstschädigenden Zustand der Rollformanlage.

Über die Anzeigeeinheit 8 kann dem Bediener ein einfaches gut- oder Fehler- oder grün/rot-Signal oder Ähnliches angezeigt werden. Über die Anzeigeeinheit 8 kann dem Bediener aber auch ein Hinweis gegeben werden, welche Ursache für den aktuellen Zustand wahrscheinlich ist, beispielsweise Lagerschaden an erster Welle 3, Lagerschaden an der zweiten Welle 4, Blechband zu dick, zu wenig Vorschub von den vorangehenden Rollformgerüsten oder ähnliches. Die Anzeigeeinheit 8 gibt den Zustand des jeweiligen Sensor-Rollformgerüst 5 an, sie kann aber auch separat einen jeweiligen Zustand eines weiteren Sensor-Rollformgerüst 5 anzeigen. Die Anzeigeeinheit umfasst bevorzugt eine Lichtampel, ein Display, einen Monitor, eine Smartphone-Anzeige, ein Tablet, eine Alarmleuchte, eine optische Alarmzeige, einen akustischen Alarmgeber oder eine Kombination daraus.

Um den jeweiligen Toleranzbereich für das Sensorsignal oder dessen jeweilige Signalkomponente zu bestimmen, ist der Detektoralgorithmus bevorzugt ausgebildet, das Sensorsignal auf ein Bedienersignal hin als den vorbestimmten Sollwert oder die Sollwertkurve zu bestimmen und abzuspeichern. Das Bedienersignal kann durch den Bediener auch mehrfach betätigt werden, wobei vom Detektoralgorithmus dann beispielsweise ein Mittelwert, wie beispielsweise ein arithmetischer oder ein Medianwert, gebildet wird, um den Sollwert oder die Sollwertkurve zu erhalten. Die Sollwertkurve anstelle eines einzigen Sollwerts ist beispielsweise dann sinnvoll zu erzeugen, wenn das Sensorsignal eine typisch periodische Charakteristik aufweist, wie in Fig. 3 dargestellt.

Bevorzugt ist der Detektoralgorithmus ausgebildet, auf ein Bedienersignal hin das Sensorsignal über einen vorbestimmten Zeitraum abzutasten, abzuspeichern und statistisch auszuwerten, wobei der dabei ermittelte vorbestimmte Sollwert oder die Sollwertkurve und der zulässige Toleranzbereich bestimmt und abgespeichert wird. Dabei bestimmt der Detektoralgorithmus den vorbestimmten Sollwert über den vorbestimmten Zeitraum bevorzugt als arithmetischen Mittelwert, als Medianwert oder als sonstigen Mittelwert.

Bevorzugt bestimmt der Detektoralgorithmus den vorbestimmten zulässigen Toleranzbereich über den vorbestimmten Zeitraum über eine Minima- und Maxima-Erkennung mit einem zusätzlichen Toleranz-Offset oder Faktor-Offset. Der Toleranz-Offset erweitert dabei den Toleranzbereich und den/die Offsetwert/e. Als Faktor-Offset wird ein Offset verstanden, der sich durch eine Multiplikation eines Faktors mit einem vorangehend bestimmten Toleranzwert ergibt.

Bevorzugt werden aus einer Reihe von abgespeicherten Sensordaten während eines Testlaufs statistisch der Sollwert als der Mittelwert und der Toleranzbereich beispielsweise als eine berechnete Varianz multipliziert mit einem vorbestimmten Faktor bestimmt.

Bevorzugt kann der Detektoralgorithmus die vorbestimmte Sollwertkurve und den zulässigen Toleranzbereich über den vorbestimmten Zeitraum so bestimmen, indem der Detektoralgorithmus mit einem bekannten Periodenerkennungsalgorithmus eine Periodizität im Sensorsignal erkennt und das Sensorsignal damit in eine Reihe periodischer Sensorsignalkurven zerlegt. Dabei bestimmt der Periodenerkennungsalgorithmus eine gemittelte Kurve aus der Reihe der periodischen Sensorsignalkurven als die vorbestimmte Sollwertkurve, wobei der zulässige Toleranzbereich als eine Einhüllende der Reihe der periodischen Sensorsignalkurven, die statistisch schwanken, unter Berücksichtigung eines zusätzlichen Offsets oder eines Faktors bestimmt und abgespeichert wird.

Bevorzugt ist der Detektoralgorithmus ausgebildet, während der Bestimmung des ersten und zweiten Zustandes eine Trendanalyse des Sensorsignals oder eines Verlaufs des Sensorsignals durchzuführen und anzuzeigen.

Bevorzugt ist der Detektoralgorithmus auch ausgebildet, während der Bestimmung des ersten und zweiten Zustandes eine Trendanalyse des Sensorsignals oder des Verlaufs des Sensorsignals durchzuführen und den vorbestimmten Sollwert oder die Sollwertkurve und den vorbestimmten Toleranzbereich repetitiv neu zu bestimmen und abzuspeichern. Bevorzugt wird der Trend des Sensorsignals oder des Verlaufs des Sensorsignals an der Anzeigeeinheit 8 angezeigt.

Bevorzugt wird in einem vorbestimmten Abstand des Sensorsignals zum Sollwert oder der Sollwertkurve oder aber bei Erreichen des zweiten Zustands das Alarmsignal ausgegeben, das akustisch und/oder optisch und/oder funktional sein kann.

Bevorzugt ist der Detektoralgorithmus ausgebildet, eine Periodizität im Sensorsignal zu erkennen und das Sensorsignal im Vergleich mit dem Toleranzbereich diesem zeitrichtig zuzuordnen. In anderen Worten muss dabei das Sensorsignal mit einem typischen Verlauf des Sensorsignals verglichen werden, um dabei eine zeitliche Zuordnung des Toleranzbereichs zum Sensorsignal korrekt vornehmen zu können. In Fig. 3 ist ein periodisches Sensorsignal S1 und der Toleranzbereich dargestellt, der zwischen der oberen L1 und unteren Schwellwertkurve L2 gebildet wird. Der Detektoralgorithmus muss nun ausgebildet sein, das periodisch schwankende Sensorsignal S1 mit dem richtigen Toleranzbereich zu vergleichen. Im dargestellten Beispiel erstreckt sich eine Periode des Sensorsignal S1 von t0 bis t1, wobei das Sensorsignal S1 über der Zeitachse t nach t1 dann periodisch ähnlich weiterverläuft. Ein periodisches Sensorsignal S1 wird meist dann erzeugt, wenn das Blechband äquidistante Unebenheiten oder Löcher oder Ausschnitte darin aufweist. Beispielsweise werden in das Blechband durch eine vorhergehende Stanze in gleichmäßigen Abständen Ausschnitte durchstanzt, so dass das Blechband in einem Bereich mit dem Ausschnitt dann leichter biegbar oder rollformbar ist; dadurch treten dann in diesem Bereich geringere Kräfte auf, die von dem mindestens einen Sensor gemessen werden können. Fehlt beispielsweise ein Ausschnitt, so kann das durch den Detektoralgorithmus anhand der Abweichung im Sensorsignal detektiert werden.

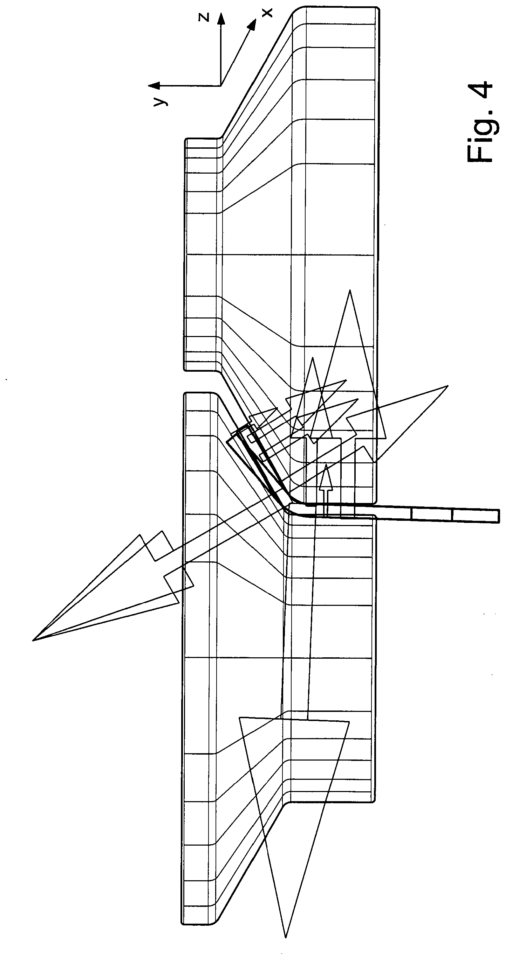

Bevorzugt umfasst die Rollformanlage zudem eine Recheneinheit oder ist mit der Recheneinheit verbunden, die mit einem Modellberechnungsmodul für eine Finite Elemente Analyse (FEA) Modellberechnung ausgestattet ist. Durch die FEA können aus Daten des Blechprofils vor und bei der Bearbeitung durch das jeweilige Sensor-Rollformgerüst 5 der vorbestimmte Sollwert und/oder die Sollwertkurve bestimmt und an die Mikroprozessoreinheit 6 übertragen werden. Dabei kann die Recheneinheit Teil der Rollformanlage oder entfernt davon sein und beispielsweise über eine LAN oder Internetverbindung mit der Rollformanlage verbunden sein. In Fig. 4 ist beispielartig ein Verlauf des Blechbandes 9 mit pfeilartigen Kraftvektoren dargestellt, die durch eine FEA Analyse in einem Umformbereich berechnet worden sind und als die Sollwerte oder Sollwertkurven verwendet werden können.

Die Mikroprozessoreinheit 6 umfasst den zweiten Detektoralgorithmus, der mit einer Mustererkennung ausgebildet ist, die das mindestens eine Sensorsignal oder den Verlauf des Sensorsignals mit dem Erkennungsmuster oder den Erkennungsparametern vergleicht und bei Übersteigen des vorbestimmten Korrelationswertes den weiteren Zustand erkennt. Der weitere Zustand kann beispielsweise der Zustand des Sensor-Rollformgerüst 5 mit dem Lagerschaden, bei der Blechdickenänderung, bei der Verstellung oder beim Verzug des Sensor-Rollformgerüsts 5 in Bezug zu dem benachbarten Rollformgerüst sein.

Bevorzugt umfasst der zweite Detektoralgorithmus eine lernende Einheit oder einen entsprechenden Lern-Algorithmus, der bei Vorliegen des weiteren Zustandes auf ein Bedienersignal hin, eine Veränderung des mindestens einen Sensorsignals oder des Verlaufs des Sensorsignals vom ersten Zustand zum weiteren Zustand bestimmt und als das Erkennungsmuster oder die Erkennungsparameter für den zweiten Detektoralgorithmus abspeichert.

Ebenso kann auch der Detektoralgorithmus eine lernende Einheit oder einen entsprechenden Lern-Algorithmus umfassen, der bei Vorliegen des zweiten Zustandes, der dem Detektoralgorithmus durch ein entsprechendes Bedienersignal hin mitgeteilt wird, eine Veränderung des mindestens einen Sensorsignals oder des Verlaufs des Sensorsignals vom ersten Zustand zum zweiten Zustand bestimmt und als das Erkennungsmuster oder die Erkennungsparameter für den Detektoralgorithmus abspeichert. Bevorzugt hat der Detektoralgorithmus also auch ein oder mehrere Bediensignale als Eingangssignal, um einen oder mehrere Zustände entsprechend durch die ein oder mehrere Bediensignale lernen oder zuordnen zu können. Bekannt sind dafür beispielsweise Cluster-Korrelationsalgorithmen. Andere aus dem Stand der Technik bekannte Lernalgorithmen sind dabei ebenso denkbar angewendet zu werden.

Bevorzugt basiert der Detektionsalgorithmus und/oder der zweite Detektionsalgorithmus auf einem neuronalen Netz, einem Kalmann-Filter, einem Prädiktionsfilter oder auf einem anderen bekannten Mustererkennungsalgorithmus.

Bevorzugt ist ein Mittel der Rollformanlage ausgebildet, zuvor bestimmte Erkennungsmuster oder die Erkennungsparameter für den jeweiligen zweiten oder weiteren Zustand in einem Speicher oder einer Datenbank abzuspeichern und dem Da oder dem zweiten Detektoralgorithmus zugänglich zu machen.

Bevorzugt bestimmt das Mittel der Rollformanlage, das die bestimmten Erkennungsmuster oder die Erkennungsparameter für den jeweiligen weiteren Zustand in einem Speicher oder einer Datenbank abspeichert und dem zweiten Detektoralgorithmus zugänglich macht, bei einer erneuten Bedienereingabe des zweiten oder weiteren Zustands, die jeweiligen Erkennungsmuster oder Erkennungsparameter unter Berücksichtigung der zuvor abgespeicherten Erkennungsmuster oder Erkennungsparameter erneut und speichert diese ab.

Bevorzugt umfassen das Sensorsignal, der vorbestimmte Sollwert oder die vorbestimmte Sollwertkurve und der zulässige Toleranzbereich jeweils zwei oder mehr Signalkomponenten, die jeweils miteinander verarbeitet werden.

Bevorzugt umfasst das Sensorsignal die erste Kraftkomponente, die vom Blechband senkrecht auf die erste Rolle eingeleitet wird, die zweite Kraftkomponente, die vom Blechband tangential auf die erste Rolle und quer zur Längsrichtung des Blechbandes eingeleitet wird, und/oder die dritte Kraftkomponente, die vom Blechband tangential in der Längsrichtung auf die erste Rolle eingeleitet wird. Bevorzugt umfasst das Sensorsignal auch die vierte Kraftkomponente, die vom Blechband senkrecht auf die zweite Rolle eingeleitet wird, die fünfte Kraftkomponente, die vom Blechband tangential auf die zweite Rolle und quer zur Längsrichtung des Blechbandes eingeleitet wird, und/oder die sechste Kraftkomponente, die vom Blechband tangential in der Längsrichtung auf die zweite Rolle eingeleitet wird.

Bevorzugt umfasst das Sensorsignal ein Differenzsignal zwischen der ersten Kraftkomponente, die vom Blechband senkrecht auf die erste Rolle eingeleitet wird, und der vierten Kraftkomponente, die vom Blechband senkrecht auf die zweite Rolle eingeleitet wird.

Bevorzugt umfasst das Sensorsignal auch mindestens eine Komponente mindestens eines benachbarten Sensor-Rollformgerüsts 5 oder mindestens eines anderen Sensors in oder an der Rollformanlage.

Beispielsweise kann das Sensorsignal mindestens eine Stromkomponente mindestens eines Antriebsmotors in der Rollformanlage umfassen.

Bevorzugt ist das Sensor-Rollformgerüst 5 zwischen einem ersten und einem letzten Rollformgerüst angeordnet.

Ein bevorzugtes Verfahren zum Rollformen oder Biegen des Blechbands in der Rollformanlage mit der Vielzahl hintereinander angeordneter Rollformgerüste, wobei mindestens eines der Rollformgerüste als das oben beschriebene Sensor-Rollformgerüst 5 mit der damit verbundenen Mikroprozessoreinheit 6 und Anzeigeeinheit 8 ausgebildet ist, umfasst folgende Schritte:
a) Zuführen und Durchleiten des Blechbandes durch die Rollformanlage;
b) Messen am jeweiligen Sensor-Rollformgerüst 5 von mindestens einer Kraft und/oder eines Drehmoments zwischen dem Blechband und dem jeweiligen Sensor-Rollformgerüst 5, wobei das zum jeweiligen Sensor-Rollformgerüst 5 gehörige jeweilige Sensorsignal oder die jeweilige Signalkomponente des jeweiligen Sensorsignals erzeugt wird;
c) Bestimmen und Abspeichern des zum jeweiligen Sensor-Rollformgerüst 5 gehörigen Soll-Sensorsignals, das dem Sollwert oder der Sollwertkurve entspricht und einer jeweiligen gewünschten Prozessbearbeitung am jeweiligen Sensor-Rollformgerüst 5 zugeordnet ist;
d) Bestimmen und Abspeichern des mit dem jeweiligen Soll-Sensorsignal verbundenen jeweiligen Toleranzbereichs, in dem das jeweilige Sensorsignal im ersten Zustand des jeweiligen Sensor-Rollformgerüsts 5 statistisch liegt;
e) Repetitives Messen des jeweiligen Sensorsignals und Vergleichen mit dem jeweiligen Toleranzbereich;
f) Bestimmen und Anzeigen des ersten Zustands, wenn das jeweilige Sensorsignal im jeweiligen Toleranzbereich liegt, und andernfalls bestimmen und anzeigen des mindestens einen zweiten Zustands des jeweiligen Sensor-Rollformgerüsts 5;
g) wobei das Bestimmen des jeweiligen Soll-Sensorsignals und/oder des jeweiligen Toleranzbereichs kontinuierlich oder periodisch durch einen Lern-Algorithmus vorgenommen wird, der den Toleranzbereich für eine Detektion des ersten Zustands für das Sensorsignal so weit spreizt, bis durch ein Bedienersignal mindestens ein zweiter Zustand des jeweiligen Sensor-Rollformgerüsts (5) eingegeben und zugeordnet wird.

Bevorzugt wird das Bestimmen des jeweiligen Soll-Sensorsignals und/oder des jeweiligen Toleranzbereichs statistisch durch das jeweilige Bedienersignal durchgeführt, durch das jeweils der erste und/oder der mindestens eine zweite Zustand des jeweiligen Sensorsignals des jeweiligen Sensor-Rollformgerüsts 5 durch einen Bediener zugeordnet wird. Beispielsweise wird dabei bei jedem Betätigen des Bedienersignals das jeweilige Sensorsignal oder ein Verlauf des jeweiligen Sensorsignals gespeichert und weiter bevorzugt mit einem zuvor bestimmten jeweiligen Sensorsignal oder Verlauf des jeweiligen Sensorsignals gemittelt abgespeichert.

Bevorzugt kann das Bestimmen des jeweiligen Soll-Sensorsignals und/oder des jeweiligen Toleranzbereichs auch durch eine finite Elemente Analyse vorgenommen werden, wobei mindestens eine Kraft und/oder das Drehmoment zwischen dem Blechband und dem jeweiligen Sensor-Rollformgerüst 5 bestimmt und der zugehörige Toleranzbereich geschätzt werden. Zur Klarheit kann das Soll-Sensorsignal auch ein Verlauf des Soll-Sensorsignals sein.

Das Bestimmen des jeweiligen Soll-Sensorsignals und/oder des jeweiligen Toleranzbereichs wird kontinuierlich oder periodisch durch den Lern-Algorithmus vorgenommen, der den Toleranzbereich für die Detektion des ersten Zustands für das Sensorsignal so weit spreizt, bis durch das Bedienersignal mindestens der zweite Zustand des jeweiligen Sensor-Rollformgerüsts 5 eingegeben und zugeordnet wird.

Bevorzugt werden nach einer ersten Phase eines Bestimmens des jeweiligen Soll-Sensorsignals und/oder des jeweiligen Toleranzbereichs dann in der normalen Betriebsphase das jeweilige Soll-Sensorsignal und/oder der jeweilige Toleranzbereichs kontinuierlich oder periodisch durch den Lern-Algorithmus weiter bestimmt, der den Toleranzbereich für eine Detektion des ersten Zustands für das Sensorsignal so weit spreizt, bis durch ein Bedienersignal der mindestens eine zweite Zustand des jeweiligen Sensor-Rollformgerüsts 5 eingegeben und zugeordnet wird.

Bevorzugt wird auf ein Bedienersignal zu einem Fehlerzustand am jeweiligen Sensorgerüst 5 hin ein Muster des Sensorsignals oder des Verlaufs des Sensorsignals bestimmt und abgespeichert, wobei das Muster signifikant für den Fehlerzustand ist. Daraufhin wird nachfolgend das Sensorsignal durch einen entsprechenden Detektions- oder Mustererkennungsalgorithmus weiter auf diesen Fehlerzustand untersucht und bei Übersteigen eines Korrelationswertes der Fehlerzustand bestimmt und angezeigt.

Zur Klarheit werden unter den Merkmalen "oben" und "unten "relative Ortsangaben in senkrechter Richtung verstanden, so wie in den Figuren dargestellt.
Zur Klarheit ist das Sensorsignal ein zeitabhängiges Sensorsignal und kann auch als Sensorsignalverlauf gesehen werden. Eine Rolle ist gleichbedeutend mit einer Walze. Bevorzugt kann die erste 3 oder zweite Welle 4, nicht wie in Fig. 1 dargestellt, nur an beiden Enden gelagert gehalten werden, sondern sie können auch nur an einem Ende gelagert gehalten werden. Dabei kann das Sensor-Rollformgerüst 5 oder die anderen Rollformgerüste auch durch Aktuatoren aktuatorisch verstellbar sein.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die In den Ansprüchen genannten Bezugszeichen dienen nur der besseren Verständlichkeit und beschränken die Ansprüche in keiner Weise auf die in den Figuren dargestellten Formen.

### Bezugszeichenliste

- 1, 1': erster Sensor
- 2, 2': zweiter Sensor
- 3: erste Welle für die erste Rolle
- 4: zweite Welle für die zweite Rolle
- 5: Sensor-Rollformgerüst
- 6: Mikroprozessoreinheit
- 7: Bediensignalgeber
- 8: Anzeigeeinheit oder Display
- 9: Blechband
- S1: Sensorsignal
- L1: obere Schwellwertkurve
- L2: untere Schwellwertkurve
- t: Zeit
- t0: erster Zeitpunkt
- t1: zweiter Zeitpunkt
- x, y,z: Koordinaten

## Patentansprüche

1. Rollformanlage zum Rollformen eines Blechbandes mit einer Vielzahl hintereinander angeordneter Rollformgerüste, die das Blechband der Reihe nach formen und/oder führen, umfassend:
a) mindestens ein Sensor-Rollformgerüst (5), das in der Vielzahl der hintereinander angeordneten Rollformgerüste angeordnet ist und welches das Blechband formt, biegt und/oder führt;
b) eine erste Rolle und eine zweite Rolle, die um eine jeweilige Drehachse drehbar mit dem jeweiligen Sensor-Rollformgerüst (5) verbunden sind und davon in Position gehalten werden, wobei die erste und zweite Rolle so angeordnet sind, dass sie das Blechband dazwischen klemmen;
c) mindestens einen Sensor (1, 2), der im jeweiligen Sensor-Rollformgerüst (5) so angeordnet ist, um eine Kraft, eine Schwingung oder ein Drehmoment die/das vom jeweiligen Sensor-Rollformgerüst (5) auf das Blech ausgeübt wird, misst und ein entsprechendes Sensorsignal erzeugt;
d) eine Mikroprozessoreinheit (6) mit einem Detektoralgorithmus, der ausgebildet ist, das Sensorsignal mit einem entsprechenden vorbestimmten Sollwert oder einer Sollwertkurve bei einem entsprechenden vorbestimmten zulässigen Toleranzbereich zu vergleichen, wobei wenn das Sensorsignal im zulässigen Toleranzbereich liegend detektiert wird, ein erster Zustand und andernfalls mindestens ein zweiter Zustand des jeweiligen Sensor-Rollformgerüsts (5) erkannt wird;
e) eine Anzeigeeinheit (8), die den erkannten ersten und/oder zweiten Zustand für das jeweilige Sensor-Rollformgerüst (5) anzeigt;
**dadurch gekennzeichnet, dass**
f) die Mikroprozessoreinheit (6) einen zweiten Detektoralgorithmus umfasst, der mit einer Mustererkennung ausgebildet ist, die das mindestens eine Sensorsignal oder den Verlauf des Sensorsignals mit einem Erkennungsmuster oder Erkennungsparametern vergleicht und bei Übersteigen eines vorbestimmten Korrelationswertes einen weiteren Zustand erkennt, wie einen Lagerschaden, eine Blechdickenänderung, eine Verstellung oder einen Verzug des Sensor-Rollformgerüsts (5) in Bezug zu einem benachbarten Rollformgerüst oder eine andere Veränderung.

2. Rollformanlage gemäß Anspruch 1, wobei der zweite Detektoralgorithmus eine lernende Einheit oder einen entsprechenden Lern-Algorithmus umfasst, der bei Vorliegen des weiteren Zustandes auf ein Bedienersignal hin, eine Veränderung des mindestens einen Sensorsignals oder des Verlaufs des Sensorsignals vom ersten Zustand zum weiteren Zustand bestimmt und als das Erkennungsmuster oder die Erkennungsparameter für den zweiten Detektoralgorithmus abspeichert.

3. Rollformanlage gemäß Anspruch 1 oder 2, wobei der zweite Detektionsalgorithmus auf einem neuronalen Netz, einem Kalmann-Filter, einem Prädiktionsfilter oder auf einem anderen bekannten Mustererkennungsalgorithmus basiert.

4. Rollformanlage gemäß einem der vorstehenden Ansprüche, wobei ein Mittel der Rollformanlage ausgebildet ist, zuvor bestimmte Erkennungsmuster oder die Erkennungsparameter für einen jeweiligen weiteren Zustand in einem Speicher oder einer Datenbank abzuspeichern und dem zweiten Detektoralgorithmus zugänglich zu machen; und/oder
wobei das Mittel der Rollformanlage, das die bestimmten Erkennungsmuster oder die Erkennungsparameter für den jeweiligen weiteren Zustand in einem Speicher oder einer Datenbank abspeichert und dem zweiten Detektoralgorithmus zugänglich macht, bei einer erneuten Eingabe des jeweiligen weiteren Zustands durch den Bediener, die jeweiligen Erkennungsmuster oder Erkennungsparameter unter Berücksichtigung der zuvor abgespeicherten Erkennungsmuster oder Erkennungsparameter erneut bestimmt und abspeichert.

5. Rollformanlage gemäß einem der vorstehenden Ansprüche, wobei der Detektoralgorithmus ausgebildet ist, das Sensorsignal auf mindestens ein Bedienersignal hin als den vorbestimmten Sollwert oder die Sollwertkurve zu bestimmen und abzuspeichern; und/oder
wobei der Detektoralgorithmus ausgebildet ist, auf ein Bedienersignal hin das Sensorsignal über einen vorbestimmten Zeitraum abzutasten, abzuspeichern und statistisch so auszuwerten, um dabei den vorbestimmten Sollwert oder die Sollwertkurve und/oder den zulässigen Toleranzbereich zu bestimmen und abzuspeichern.

6. Rollformanlage gemäß Anspruch 5, wobei der Detektoralgorithmus den vorbestimmten Sollwert über den vorbestimmten Zeitraum als arithmetischen Mittelwert, als Medianwert oder sonstigen Mittelwert bestimmt; und/oder
wobei der Detektoralgorithmus den vorbestimmten zulässigen Toleranzbereich über den vorbestimmten Zeitraum über eine Minima- und Maxima-Erkennung mit einem zusätzlichen Toleranz-Offset oder Faktor-Offset bestimmt; oder
wobei der Detektoralgorithmus die vorbestimmte Sollwertkurve und den zulässigen Toleranzbereich über den vorbestimmten Zeitraum so bestimmt, indem der Detektoralgorithmus mit einem bekannten Periodenerkennungsalgorithmus eine Periodizität im Sensorsignal erkennt und das Sensorsignal damit in eine Reihe periodischer Sensorsignalkurven zerlegt, wobei der Periodenerkennungsalgorithmus eine gemittelte Kurve aus der Reihe der periodischen Sensorsignalkurven als die vorbestimmte Sollwertkurve bestimmt, und der zulässige Toleranzbereich als eine Einhüllende der Reihe der statistisch schwankenden periodischen Sensorsignalkurven unter Berücksichtigung eines zusätzlichen Offsets oder eines Faktors bestimmt und abgespeichert wird.

7. Rollformanlage gemäß einem der vorstehenden Ansprüche, wobei der Detektoralgorithmus ausgebildet ist, während der Bestimmung des ersten und zweiten Zustandes eine Trendanalyse des Sensorsignals oder eines Verlaufs des Sensorsignals durchzuführen und anzuzeigen; und/oder
wobei der Detektoralgorithmus ausgebildet ist, während der Bestimmung des ersten und zweiten Zustandes eine Trendanalyse des Sensorsignals oder des Verlaufs des Sensorsignals durchzuführen, wobei der vorbestimmte Sollwert oder die Sollwertkurve und der vorbestimmte Toleranzbereich repetitiv neu bestimmt und abgespeichert wird; und/oder
wobei der Detektoralgorithmus ausgebildet ist, eine Periodizität im Sensorsignal zu erkennen und das Sensorsignal im Vergleich mit dem Toleranzbereich diesem zeitrichtig zuzuordnen.

8. Rollformanlage gemäß einem der vorstehenden Ansprüche, wobei ein Trend des Sensorsignals oder des Verlaufs des Sensorsignals an der Anzeigeeinheit (8) angezeigt wird; und/oder
wobei in einem vorbestimmten Abstand des Sensorsignals zum Sollwert oder der Sollwertkurve oder bei Erreichen des zweiten Zustands ein akustisches und/oder optisches und/oder funktionales Alarmsignal ausgelöst wird.

9. Rollformanlage gemäß einem der vorstehenden Ansprüche, zudem eine Recheneinheit mit einem Modellberechnungsmodul für eine finite Elemente Modellberechnung umfassend, um aus Daten des Blechprofils vor und bei der Bearbeitung durch das jeweilige Sensor-Rollformgerüst (5) den vorbestimmten Sollwert und/oder die Sollwertkurve zu bestimmen und an die Mikroprozessoreinheit (6) zu übertragen.

10. Rollformanlage gemäß einem oder mehreren der vorstehenden Ansprüche, wobei das Sensorsignal, der vorbestimmte Sollwert oder die vorbestimmte Sollwertkurve und der zulässige Toleranzbereich jeweils zwei oder mehr Signalkomponenten umfassen, die jeweils miteinander verarbeitet werden;
wobei das Sensorsignal eine erste Kraftkomponente umfasst, die vom Blechband senkrecht auf die erste Rolle eingeleitet wird; und/oder
wobei das Sensorsignal eine zweite Kraftkomponente umfasst, die vom Blechband tangential auf die erste Rolle und quer zu einer Längsrichtung des Blechbandes eingeleitet wird; und/oder
wobei das Sensorsignal eine dritte Kraftkomponente umfasst, die vom Blechband tangential in der Längsrichtung auf die erste Rolle eingeleitet wird; und/oder
wobei das Sensorsignal eine vierte Kraftkomponente umfasst, die vom Blechband senkrecht auf die zweite Rolle eingeleitet wird; und/oder
wobei das Sensorsignal eine fünfte Kraftkomponente umfasst, die vom Blechband tangential auf die zweite Rolle und quer zur Längsrichtung des Blechbandes eingeleitet wird; und/oder
wobei das Sensorsignal eine sechste Kraftkomponente umfasst, die vom Blechband tangential in der Längsrichtung auf die zweite Rolle eingeleitet wird.

11. Rollformanlage gemäß einem oder mehreren der vorstehenden Ansprüche, wobei das Sensorsignal, ein Differenzsignal zwischen der ersten Kraftkomponente, die vom Blechband senkrecht auf die erste Rolle eingeleitet wird, und der vierten Kraftkomponente umfasst, die vom Blechband senkrecht auf die zweite Rolle eingeleitet wird; und/oder
wobei das Sensorsignal mindestens eine Signalkomponente mindestens eines benachbarten Sensor-Rollformgerüsts (5) umfasst; und/oder
wobei das Sensorsignal mindestens eine Signalkomponente eines Stroms mindestens eines Antriebsmotors umfasst.

12. Rollformanlage gemäß einem oder mehreren der vorstehenden Ansprüche, wobei das Sensor-Rollformgerüst (5) zwischen einem ersten und einem letzten Rollformgerüst angeordnet ist.

13. Verfahren zum Rollformen oder Biegen eines Blechbandes in einer Rollformanlage gemäß einem der vorstehenden Ansprüche 1-12 mit
einer Vielzahl hintereinander angeordneter Rollformgerüste, wobei mindestens eines der Rollformgerüste als Sensor-Rollformgerüst (5) mit einer damit verbundenen Mikroprozessoreinheit (6) und Anzeigeeinheit (8) ausgebildet ist,
folgende Schritte umfassend:
a) Zuführen und Durchleiten des Blechbandes durch die Rollformanlage;
b) Messen am jeweiligen Sensor-Rollformgerüst (5) von mindestens einer Kraft und/oder einer Schwingung und/oder eines Drehmoments zwischen dem Blechband und dem jeweiligen Sensor-Rollformgerüst (5), wobei ein jeweiliges Sensorsignal oder mindestens eine jeweilige Signalkomponente des Sensorsignals erzeugt wird;
c) Bestimmen und Abspeichern eines jeweiligen Soll-Sensorsignals, das einer jeweiligen gewünschten Prozessbearbeitung am jeweiligen Sensor-Rollformgerüst (5) zugeordnet ist;
d) Bestimmen und Abspeichern eines mit dem jeweiligen Soll-Sensorsignal verbundenen jeweiligen Toleranzbereichs, in dem das jeweilige Sensorsignal in einem ersten Zustand des jeweiligen Sensor-Rollformgerüsts (5) statistisch liegt;
e) Repetitives Messen des jeweiligen Sensorsignals und Vergleichen mit dem jeweiligen Toleranzbereich; und
f) Bestimmen und Anzeigen des ersten Zustands, wenn das jeweilige Sensorsignal im jeweiligen Toleranzbereich liegt, und andernfalls bestimmen und anzeigen mindestens eines zweiten Zustands des jeweiligen Sensor-Rollformgerüsts (5); wobei
g) das Bestimmen des jeweiligen Soll-Sensorsignals und/oder des jeweiligen Toleranzbereichs kontinuierlich oder periodisch durch einen Lern-Algorithmus vorgenommen wird, der den Toleranzbereich für eine Detektion des ersten Zustands für das Sensorsignal so weit spreizt, bis durch ein Bedienersignal mindestens ein zweiter Zustand des jeweiligen Sensor-Rollformgerüsts (5) eingegeben und zugeordnet wird.

14. Verfahren gemäß Anspruch 13, wobei nach einer ersten Phase eines Bestimmens des jeweiligen Soll-Sensorsignals und/oder des jeweiligen Toleranzbereichs dann in der normalen Betriebsphase das jeweilige Soll-Sensorsignal und/oder der jeweilige Toleranzbereichs kontinuierlich oder periodisch durch den Lern-Algorithmus weiter bestimmt werden, der den Toleranzbereich für eine Detektion des ersten Zustands für das Sensorsignal so weit spreizt, bis durch ein Bedienersignal der mindestens eine zweiter Zustand des jeweiligen Sensor-Rollformgerüsts (5) eingegeben und zugeordnet wird.

15. Verfahren gemäß Anspruch 13 oder 14, wobei auf ein Bedienersignal zu einem Fehlerzustand am jeweiligen Sensorgerüst (5) hin ein Muster des Sensorsignals oder des Verlaufs des Sensorsignals bestimmt und abgespeichert wird, das signifikant für den Fehlerzustand ist, woraufhin nachfolgend das Sensorsignal durch einen entsprechenden Detektions- oder Mustererkennungsalgorithmus weiter auf diesen Fehlerzustand untersucht wird und bei Übersteigen eines Korrelationswertes der Fehlerzustand bestimmt und angezeigt wird.

## Claims

1. Roll-forming unit for roll-forming a metal strip with a plurality of roll-forming frames arranged one behind the other which sequentially form and/or guide the metal strip; comprising:
a) at least one sensor roll-forming frame (5) which is arranged in the plurality of roll-forming frames arranged one behind the other and which forms, bends and/or guides the metal strip;
b) a first roller and a second roller attached rotatably about a respective rotational axis to the respective sensor roll-forming frame (5) and retained in position by it; the first and the second roller being arranged such that they clamp the metal strip therebetween;
c) at least one sensor (1, 2) arranged in the respective sensor roll-forming frame (5) so as to measure a force, an oscillation or a torque exerted on the metal strip by the respective sensor roll-forming frame (5) and to generate a corresponding sensor signal;
d) a microprocessor unit (6) with a detection algorithm adapted to compare the sensor signal with a respective predefined setpoint value or a setpoint value curve with a respective predefined allowable tolerance range, where, when the sensor signal is detected to lie within the allowable tolerance range, a first state is recognized and otherwise, at least one second state of the respective sensor roll-forming frame (5);
e) a display unit (8) displaying the detected first and/or second states of the respective sensor roll-forming frame (5);
**characterized in that**
f) the microprocessor unit (6) comprises a second detection algorithm which is equipped with a pattern recognition that compares the at least one sensor signal or the development of the sensor signal with a recognition pattern or recognition parameters and detects, if a predefined correlation value is exceeded, an additional state, such as a bearing damage, a change in strip thickness, a displacement or warpage of the sensor roll-forming frame (5) with respect to an adjacent roll-forming frame or another type of change.

2. Roll-forming unit according to Claim 1, the second detection algorithm comprising a learning unit or a corresponding learning algorithm which, if the additional state occurs, determines, upon an operator signal, a change in the at least one sensor signal or in the development of the sensor signal from the first state to the additional state, and which stores it as the recognition pattern or the recognition parameters for the second detection algorithm.

3. Roll-forming unit according to Claim 1 or 2, the second detection algorithm being based on a neuronal network, a Kalman filter, a prediction filter or another known pattern recognition algorithm.

4. Roll-forming unit according to one of the above Claims, where a means of the roll-forming unit is adapted to store previously determined recognition patterns or the recognition parameters for a respective additional state in a memory or a database and to make them available to the second detection algorithm; and/or
where the means of the roll-forming unit which stores the determined recognition patterns or recognition parameters for the respective additional state in a memory or a database and makes them available to the second detection algorithm, re-determines and again stores the respective recognition patterns or recognition parameters when the respective additional state is again input by the operator, taking into account the previously stored recognition patterns or recognition parameters.

5. Roll-forming unit according to one of the above Claims, where the detection algorithm is adapted to determine and store the sensor signal as the predetermined setpoint value or setpoint value curve as a reaction to at least one operator signal; and/or
where the detection algorithm is adapted, as a reaction to an operator signal, to sample, store and statistically evaluate the sensor signal over a predefined time period so as to determine and store the predefined setpoint value or setpoint value curve and/or the allowable range of tolerance.

6. Roll-forming unit according to Claim 5, the detection algorithm determining the predefined setpoint value over the predefined time period as the arithmetic mean, the median value or another type of mean; and/or
the detection algorithm determining the predefined allowable range of tolerance over the predefined time period by means of a minima or maxima recognition with an additional tolerance offset or factor offset; or
the detection algorithm determining the predefined setpoint value curve and the allowable range of tolerance over the predefined time period by recognizing, by means of a known period recognition algorithm, a periodicity in the sensor signal and thus subdividing the sensor signal into a series of periodic sensor signal curves, the period recognition algorithm determining an averaged curve from the series of periodic sensor signal curves to be the predefined setpoint value curve, and the allowable tolerance range being determined and stored as an envelope of the series of statistically varying periodic sensor signal curves, taking into account an additional offset or a factor.

7. Roll-forming unit according to one of the above Claims, the detection algorithm being adapted to perform and display, during determining of the first and the second state, a trend analysis of the sensor signal or of a development of the sensor signal; and/or
the detection algorithm being adapted to perform, during determining of the first and the second state, a trend analysis of the sensor signal or of the development of the sensor signal, the predefined setpoint value or setpoint value curve and the predefined range of tolerance being iteratively redetermined and stored; and/or
the detection algorithm being adapted to recognize a periodicity in the sensor signal and to allocate the sensor signal to the tolerance range correctly in terms of time in comparison to the same.

8. Roll-forming unit according to one of the above Claims, a trend of the sensor signal or of the development of the sensor signal being displayed on the display unit (8); and/or
an acoustic and/or optic and/or functional alarm signal being triggered at a predefined deviation of the sensor signal from the setpoint value or the setpoint value curve or when the second state is reached.

9. Roll-forming unit according to one of the above Claims, additionally comprising a computing unit with a model computing module for a finite elements model computation in order to determine the predefined setpoint value and/or setpoint value curve from data of the strip profile before and during processing by the respective sensor roll-forming frame (5) and to transfer them to the microprocessor unit (6).

10. Roll-forming unit according to one or more of the above Claims, the sensor signal, the predefined setpoint value or setpoint value curve and the allowable range of tolerance each comprising two or more signal components processed together respectively;
the sensor signal comprising a first force component vertically applied by the metal strip on the first roller; and/or
the sensor signal comprising a second force component applied tangentially on the first roller by the metal strip and transversely to a longitudinal direction of the metal strip; and/or
the sensor signal comprising a third force component applied tangentially in the longitudinal direction on the first roller by the metal strip; and/or
the sensor signal comprising a fourth force component applied vertically on the second roller by the metal strip; and/or
the sensor signal comprising a fifth force component applied tangentially by the metal strip on the second roller and transversely to the longitudinal direction of the metal strip; and/or
the sensor signal comprising a sixth force component applied tangentially by the metal strip on the second roller in the longitudinal direction.

11. Roll-forming unit according to one or more of the above Claims, the sensor signal comprising a difference signal between the first force component applied vertically on the first roller by the metal strip and the fourth force component applied vertically on the second roller by the metal strip; and/or
the sensor signal comprising at least one signal component of at least one adjacent sensor roll-forming frame (5); and/or
the sensor signal comprising at least one signal component of a current of at least one drive motor.

12. Roll-forming unit according to one or more of the above Claims, the sensor roll-forming frame (5) being arranged between a first and a last roll-forming frame.

13. Method of roll-forming or bending a metal strip in a roll-forming unit according to one of the above Claims 1-12, with a plurality of roll-forming frames arranged one behind the other, wherein at least one of the roll-forming frames is devised as a sensor roll-forming frame (5) with a connected microprocessor unit (6) and display unit (8),
comprising the following steps:
a) feeding and guiding the metal strip through the roll-forming unit;
b) measuring, on the respective sensor roll-forming frame (5), at least one force and/or one oscillation and/or one torque between the metal strip and the respective sensor roll-forming frame (5), a respective sensor signal or at least one respective signal component of the sensor signal being generated;
c) determining and storing a respective setpoint sensor signal which is allocated to a respective desired processing step at the respective sensor roll-forming frame (5);
d) determining and storing a respective tolerance range related to the respective setpoint sensor signal, within which range the respective sensor signal statistically lies in a first state of the respective sensor roll-forming frame (5);
e) repeated measuring of the respective sensor signal and comparing with the respective tolerance range; and
f) determining and displaying the first state if the respective sensor signal lies within the respective tolerance range; otherwise, determining and displaying at least one second state of the respective sensor roll-forming frame (5);
wherein
g) determining of the respective setpoint sensor signal and/or of the respective tolerance range is performed continuously or periodically by a learning algorithm which expands the tolerance range for detection of the first state for the sensor signal until at least one second state of the respective sensor roll-forming frame (5) is input and allocated by means of an operator signal.

14. Method according to Claim 13, wherein after a first phase of determining the respective setpoint sensor signal and/or the respective tolerance range, subsequently, during the normal operating phase, the respective setpoint sensor signal and/or the respective tolerance range are further determined continuously or periodically by the learning algorithm which expands the tolerance range for detecting the first state for the sensor signal until the at least one second state of the respective sensor roll-forming frame (5) is input and allocated by means of an operator signal.

15. Method according to Claim 13 or 14, where upon an operator signal concerning a fault condition on the respective sensor frame (5), a pattern of the sensor signal or of the development of the sensor signal is determined and stored which is significant for the fault condition; whereupon the sensor signal is subsequently examined further with regard to this fault condition by means of a corresponding detection or pattern recognition algorithm and the fault condition is determined and displayed if a correlation value is exceeded.

## Revendications

1. Installation de profilage par roulage pour le profilage par roulage d'une bande de tôle avec une pluralité de structures de profilage par roulage disposées les unes derrière les autres, lesquelles forment et/ou guident successivement la bande de tôle, comportant:
a) au moins une structure de profilage par roulage à capteur (5) disposée parmi la pluralité de structures de profilage par roulage disposées les unes derrière les autres et chargée de former, de cintrer et/ou de guider la bande de tôle;
b) un premier rouleau et un deuxième rouleau, lesquels sont reliés à la structure de profilage par roulage à capteur (5) respective de façon rotative autour d'un axe de rotation respectif et sont maintenus en position par celle-ci, les premier et deuxième rouleaux étant disposés de manière à serrer la bande de tôle entre elles;
c) au moins un capteur (1, 2) disposé dans la structure de profilage par roulage à capteur (5) respective pour mesurer une force, une oscillation ou un couple de rotation exercé(e) sur la tôle par la structure de profilage par roulage à capteur (5) respective, et pour produire un signal de capteur correspondant;
d) une unité de microprocesseur (6) avec un algorithme de détecteur, laquelle est conçue pour comparer le signal de capteur avec une valeur de consigne prédéterminée correspondante ou une courbe de valeurs de consigne en tenant compte d'une plage de tolérance autorisée prédéterminée correspondante, un premier état de la structure de profilage par roulage à capteur (5) respective étant reconnu lorsque le signal de capteur est détecté dans la plage de tolérance autorisée, et au moins un deuxième état étant reconnu dans le cas contraire;
e) une unité d'affichage (8) indiquant le premier et/ou le deuxième état reconnu pour la structure de profilage par roulage à capteur (5) respective;
**caractérisée en ce que**
f) l'unité de microprocesseur (6) comporte un deuxième algorithme de détecteur conçu avec une reconnaissance de modèle, laquelle compare l'au moins un signal de capteur ou l'évolution du signal de capteur avec un modèle de reconnaissance ou des paramètres de reconnaissance et reconnait une état supplémentaire en cas de dépassement d'une valeur de corrélation prédéterminée, tel qu'un dommage de stockage, une modification d'épaisseur de tôle, un déplacement ou un défaut de la structure de profilage par roulage à capteur (5) par rapport à une structure de profilage par roulage voisine ou une autre modification.

2. Installation de profilage par roulage selon la revendication 1, dans laquelle le deuxième algorithme de détecteur comporte une unité auto-adaptative ou un algorithme auto-adaptatif correspondant, lequel détermine, en présence de l'état supplémentaire en réponse à un signal d'opérateur, une modification de l'au moins un signal de capteur ou de l'évolution du signal de capteur, du premier état vers l'état supplémentaire, et enregistre celle-ci en tant que modèle de reconnaissance ou que paramètres de reconnaissance pour le deuxième algorithme de détecteur.

3. Installation de profilage par roulage selon la revendication 1 ou 2, dans laquelle le deuxième algorithme de détection est basé sur un réseau neuronal, un filtre Kalmann, un filtre de prédiction ou sur un autre algorithme connu de reconnaissance de modèle.

4. Installation de profilage par roulage selon l'une des revendications précédentes, dans laquelle un moyen de l'installation de profilage par roulage est conçu pour enregistrer des modèles de reconnaissance déterminés précédemment ou les paramètres de reconnaissance pour un état supplémentaire respectif dans une mémoire ou une banque de données et pour rendre ceux-ci accessibles au deuxième algorithme de détecteur; et/ou
dans laquelle le moyen de l'installation de profilage par roulage chargé d'enregistrer des modèles de reconnaissance déterminés ou les paramètres de reconnaissance pour un état supplémentaire respectif dans une mémoire ou une banque de données et de rendre ceux-ci accessibles au deuxième algorithme de détecteur détermine et enregistre à nouveau les modèles de reconnaissance ou les paramètres de reconnaissance respectifs en tenant compte des modèles de reconnaissance ou des paramètres de reconnaissance enregistrés précédemment, lors d'une nouvelle entrée de l'état supplémentaire respectif par l'opérateur.

5. Installation de profilage par roulage selon l'une des revendications précédentes, dans laquelle l'algorithme de détecteur est conçu pour déterminer et enregistrer le signal de capteur en tant que valeur de consigne prédéterminée ou que courbe de valeurs de consigne en réponse à au moins un signal d'opérateur; et/ou
dans laquelle l'algorithme de détecteur est conçu pour échantillonner sur une durée prédéterminée, enregistrer et évaluer statistiquement le signal de capteur, en réponse à un signal d'opérateur, pour ainsi déterminer et enregistrer la valeur de consigne prédéterminée ou la courbe de valeurs de consigne et/ou la plage de tolérance autorisée.

6. Installation de profilage par roulage selon la revendication 5, dans laquelle l'algorithme de détecteur détermine la valeur de consigne prédéterminée sur la durée prédéterminée en tant que valeur moyenne arithmétique, en tant que valeur médiane ou autre valeur moyenne; et/ou
dans laquelle l'algorithme de détecteur détermine la plage de tolérance autorisée prédéterminée sur la durée prédéterminée par le biais d'une reconnaissance de minima et de maxima avec un décalage de tolérance ou un décalage de facteur supplémentaire; ou
dans laquelle l'algorithme de détecteur détermine la courbe de valeurs de consigne prédéterminée et la plage de tolérance autorisée sur la durée prédéterminée, de telle façon que l'algorithme de détecteur reconnait une périodicité dans le signal de capteur avec un algorithme connu de reconnaissance de période et décompose le signal de capteur en une série de courbes de signal de capteur périodiques, dans laquelle l'algorithme de reconnaissance de période détermine une courbe moyenne à partir de la série de courbes de signal de capteur périodiques en tant que courbe de valeurs de consigne prédéterminée, et la plage de tolérance autorisée est déterminée et enregistrée en tant qu'enveloppe de la série des courbes de signal de capteur périodiques fluctuant statistiquement en tenant compte d'un décalage supplémentaire ou d'un facteur.

7. Installation de profilage par roulage selon l'une des revendications précédentes, dans laquelle l'algorithme de détecteur est conçu pour effectuer et indiquer une analyse de tendance du signal de capteur ou d'une évolution du signal de capteur pendant la détermination des premier et deuxième états; et/ou
dans laquelle l'algorithme de détecteur est conçu pour effectuer une analyse de tendance du signal de capteur ou de l'évolution du signal de capteur pendant la détermination des premier et deuxième états, la valeur de consigne prédéterminée ou la courbe de valeurs de consigne et la plage de tolérance prédéterminée étant déterminées à nouveau de façon répétée et enregistrées; et/ou
dans laquelle l'algorithme de détecteur est conçu pour reconnaître une périodicité dans le signal de capteur et pour attribuer le signal de capteur en comparaison avec la plage de tolérance à celle-ci au moment opportun.

8. Installation de profilage par roulage selon l'une des revendications précédentes, dans laquelle une tendance du signal de capteur ou de l'évolution du signal de capteur est indiquée sur l'unité d'affichage (8) ; et/ou
dans laquelle un signal d'alarme acoustique et/ou optique et/ou fonctionnel est déclenché à une distance prédéterminée du signal de capteur par rapport à la valeur de consigne ou à la courbe de valeurs de consigne ou lors de l'atteinte du deuxième état.

9. Installation de profilage par roulage selon l'une des revendications précédentes, comportant en outre une unité de calcul avec un module de calcul de modèle pour un calcul de modèle à éléments finis, permettant de déterminer la valeur de consigne prédéterminée et/ou la courbe de valeurs de consigne à partir de données du profilé de tôle avant et pendant le traitement par la structure de profilage par roulage à capteur (5) respective et de transmettre celles-ci à l'unité de microprocesseur (6).

10. Installation de profilage par roulage selon l'une ouplusieurs des revendications précédentes, dans laquelle le signal de capteur, la valeur de consigne prédéterminée ou la courbe de valeurs de consigne prédéterminée et la plage de tolérance autorisée comportent respectivement deux composantes de signal ou plus, lesquelles sont traitées respectivement ensemble;
dans laquelle le signal de capteur comporte une première composante de force, laquelle est exercée par la bande de tôle perpendiculairement sur le premier rouleau; et/ou
dans laquelle le signal de capteur comporte une deuxième composante de force exercée par la bande de tôle tangentiellement sur le premier rouleau et transversalement à la direction longitudinale de la bande de tôle; et/ou
dans laquelle le signal de capteur comporte une troisième composante de force exercée par la bande de tôle tangentiellement dans la direction longitudinale sur le premier rouleau; et/ou
dans laquelle le signal de capteur comporte une quatrième composante de force exercée par la bande de tôle perpendiculairement sur le deuxième rouleau ; et/ou
dans laquelle le signal de capteur comporte une cinquième composante de force exercée par la bande de tôle tangentiellement sur le deuxième rouleau et transversalement à la direction longitudinale de la bande de tôle; et/ou
dans laquelle le signal de capteur comporte une sixième composante de force exercée par la bande de tôle tangentiellement dans la direction longitudinale sur le deuxième rouleau.

11. Installation de profilage par roulage selon l'une ou plusieurs des revendications précédentes, dans laquelle le signal de capteur comporte un signal différentiel entre la première composante de force, exercée par la bande de tôle perpendiculairement sur le premier rouleau, et la quatrième composante de force exercée par la bande de tôle perpendiculairement sur le deuxième rouleau; et/ou
dans laquelle le signal de capteur comporte au moins une composante de signal d'une structure de profilage par roulage à capteur (5) voisine; et/ou
dans laquelle le signal de capteur comporte au moins une composante de signal d'un courant d'au moins un moteur d'entraînement.

12. Installation de profilage par roulage selon l'une ou plusieurs des revendications précédentes, dans laquelle la structure de profilage par roulage à capteur (5) est disposée entre une première et une dernière structure de profilage par roulage.

13. Procédé de profilage par roulage ou de cintrage d'une bande de tôle dans une installation de profilage par roulage selon l'une des revendications précédentes 1 à 12, comprenant une pluralité de structures de profilage par roulage disposées les unes derrière les autres, dans laquelle l'une au moins des structures de profilage par roulage est conçue comme une structure de profilage par roulage à capteur (5) avec une unité de microprocesseur (6) reliée à celle-ci et une unité d'affichage (8), comportant les étapes suivantes:
a) acheminement et guidage de la bande de tôle à travers l'installation de profilage par roulage;
b) mesure, au niveau de la structure de profilage par roulage à capteur (5) respective, d'au moins une force et/ou d'une oscillation et/ou d'un couple de rotation entre la bande de tôle et la structure de profilage par roulage à capteur (5) respective, dans laquelle un signal de capteur respectif ou au moins une composante de signal respective du signal de capteur est généré(e);
c) détermination et enregistrement d'un signal de capteur de consigne respectif, lequel est attribué à un processus de traitement souhaité respectif au niveau de la structure de profilage par roulage à capteur (5) respective;
d) détermination et enregistrement d'une plage de tolérance respective associée au signal de capteur de consigne respectif, dans laquelle le signal de capteur respectif se trouve statistiquement dans un premier état de la structure de profilage par roulage à capteur (5) respective;
e) mesure répétée du signal de capteur respectif et comparaison avec la plage de tolérance respective; et
f) détermination et affichage du premier état, lorsque le signal de capteur respectif se trouve dans la plage de tolérance respective, et dans le cas contraire, détermination et affichage d'au moins un deuxième état de la structure de profilage par roulage à capteur (5) respective; dans lequel
g) la détermination du signal de capteur de consigne respectif et/ou la plage de tolérance respective est effectuée en continu ou périodiquement par un algorithme d'apprentissage, lequel élargit la plage de tolérance pour le signal de capteur pour une détection du premier état jusqu'à ce qu'au moins un deuxième état de la structure de profilage par roulage à capteur (5) respective soit entré par un signal d'opérateur et attribué.

14. Procédé selon la revendication 13, dans lequel, après la première phase d'une détermination du signal de capteur de consigne respectif et/ou de la plage de tolérance respective, le signal de capteur de consigne respectif et/ou la plage de tolérance respective est en outre déterminé(e) de façon continue ou périodique par l'algorithme d'apprentissage pendant la phase de fonctionnement normale, lequel élargit la plage de tolérance pour le signal de capteur pour une détection du premier état, jusqu'à ce que l'au moins un deuxième état de la structure de profilage par roulage à capteur (5) respective soit entré par un signal d'opérateur et attribué.

15. Procédé selon la revendication 13 ou 14, dans lequel, en réponse à un signal d'opérateur relatif à un état défectueux au niveau de la structure de profilage par roulage (5) respective, un modèle du signal de capteur ou de l'évolution du signal de capteur est déterminé et enregistré, lequel est significatif d'un état défectueux, suite à quoi le signal de capteur est examiné davantage quant à cet état défectueux par un algorithme de détection ou de reconnaissance de modèle correspondant et l'état défectueux est déterminé et indiqué lors d'un dépassement d'une valeur de corrélation.
